# FASCICULE DE BREVET EUROPEEN

(11) **EP 3 237 190 B1**
(45) Date de publication et mention de la délivrance du brevet: **16.12.2020**
(21) Numéro de dépôt: 15821078.1
(22) Date de dépôt: 22.12.2015
(51) Int. Cl.: B29D 30/22, B29D 30/38, B29D 30/30

(54) **DISPOSITIF ET PROCEDE POUR LA FABRICATION DE PNEUMATIQUES**
VORRICHTUNG UND VERFAHREN ZUR HERSTELLUNG VON REIFEN
DEVICE AND METHOD FOR PRODUCING TYRES

(30) Priorité: 23.12.2014 FR 1463177
(43) Date de publication de la demande: 01.11.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: DETTORRE, Jean-Marie, 63040 Clermont-Ferrand Cedex 9 (FR); DRUET, Michel, 63040 Clermont-Ferrand Cedex 9 (FR); DEBOEUF, Michel, 63040 Clermont-Ferrand Cedex 9 (FR); FAUGERAS, Alain, 63040 Clermont-Ferrand Cedex 9 (FR); JAUNET, Nicolas, 63040 Clermont-Ferrand Cedex 9 (FR)
(74) Mandataire: Lasson, Cédric Yves
(86) Numéro de dépôt international: PCT/EP2015/081071
(87) Numéro de publication internationale: WO 2016/102614

(56) Documents cités:
- EP-A1- 2 283 998
- EP-A1- 2 341 184
- EP-A2- 1 022 118
- EP-A2- 2 000 291
- JP-A- H07 189 148
- JP-A- H10 225 998
- JP-A- 2002 347 134

## Description

L'invention concerne le domaine de la fabrication des pneumatiques pour véhicules de tourisme ou utilitaires et s'intéresse plus particulièrement aux procédés d'assemblage permettant de poser successivement l'ensemble des constituants d'un tel pneumatique sans variation sensible du diamètre de pose.

Dans ce type de procédés, l'ensemble des opérations de confection de l'ébauche est réalisé sur un tambour dont le diamètre correspond de préférence sensiblement au diamètre intérieur du pneumatique (couramment appelé « diamètre au seat » en référence au diamètre normalisé de la jante sur laquelle le pneumatique sera monté lors de son utilisation). Ainsi, non seulement la carcasse, les bourrelets et les flancs, mais aussi les renforts de sommet et la bande de roulement peuvent être posés sur un tambour d'assemblage dont le diamètre correspond sensiblement au diamètre du seat. Un avantage de ce type de procédés est qu'il peut permettre de conserver l'ébauche du pneumatique sur le même tambour tout au long de sa confection. L'ébauche complète peut ensuite être directement introduite dans un moule de vulcanisation où elle prend son diamètre final par l'action d'une pression interne. Un exemple de ce type de procédé est donné dans le document FR1508652. Des autres procédés correspondants sont montrés par l'art antérieur, par exemple, par le document JPH07189148 (un procédé de production d'un cordon métallique pour qu'il possède de bonnes propriétés de résistance à la corrosion, de résistance à la fatigue et d'adhérence aux caoutchouc), par le document JP2002347134 (un procédé de fabrication de pneumatique et un dispositif de liaison de cordon de carcasse qui raccourcit le temps d'enroulement d'un cordon de carcasse), et le document EP2283998 (un procédé de fabrication de pneumatique en enroulant un cordon d'acier ondulé plusieurs fois autour d'un tambour de formage for former une couche de renfort de cordon cylindrique).

On appelle conformation la transformation que subit l'ébauche de pneumatique lorsqu'elle passe de sa forme sensiblement tubulaire à la forme généralement toroïdale d'un pneumatique fini. Lors de la conformation, la partie centrale de l'ébauche qui correspond au sommet du pneumatique voit son diamètre augmenter par l'action d'une pression interne alors que les bourrelets sont maintenus au diamètre initial. La différence de circonférence entre le diamètre au seat et le diamètre conformé est généralement comprise entre 30% et 70% et par exemple couramment de l'ordre de 50% pour un pneumatique pour véhicule de tourisme.

Une limite de ces procédés provient du fait que l'armature de sommet des pneumatiques pour véhicules de tourisme ou utilitaires comportent de manière pratiquement systématique des renforts circonférentiels de frettage, souvent appelés « renforts à 0° ». La fonction de ces renforts à 0° est de brider fermement l'expansion circonférentielle du pneumatique lors de son utilisation, notamment à haute vitesse. On parle de renforts à 0° même lorsqu'ils sont posés par enroulement hélicoïdal et donc avec un très léger angle d'hélice. On néglige généralement cet angle d'hélice et l'on considère que l'effet des renforts de frettage est le même que s'ils étaient disposés dans un plan strictement parallèle au plan équatorial du pneumatique. On comprend que s'ils étaient posés sur l'ébauche avant sa conformation, ces renforts à 0° empêcheraient la conformation.

Des solutions à cette impossibilité sont proposées par exemple dans les documents US4050973 ou US4094354.

Le document US4050973 propose que les renforts à 0° soient préparés et posés sur l'ébauche de pneumatique sous une forme ondulée obtenue par tricotage de renforts à 0° avec des fils plus courts mais fragiles, ces fils étant rompus lors de la conformation. Un problème de ce procédé est manifestement la complexité et la lenteur de la préparation du tricot. Un autre problème est le fait d'avoir recours à des fils supplémentaires qui sont inutiles dans le produit final et qui peuvent en outre être nuisibles.

Le document US4094354 propose que les renforts à 0° soient préparés sous la forme d'une double bandelette de caoutchouc comprenant d'une part des renforts à 0° ondulés et d'autre part des fils tendus mais fragiles et destinés à être rompus lors de la conformation. Un problème de ce procédé est manifestement la complexité de la préparation de la double bandelette ainsi que le fait d'introduire des fils inutiles voire nuisibles dans le produit final.

Ainsi, malgré ces propositions, l'industrie du pneumatique n'a pas adopté ce type de procédé d'assemblage de l'ensemble de l'ébauche au diamètre du seat pour la fabrication des pneumatiques comportant des renforts de sommet à 0° et en particulier pour la fabrication des pneumatiques radiaux modernes.

L'invention a donc pour objectif de pallier l'un au moins des inconvénients décrits ci-dessus.

L'invention propose pour cela un dispositif permettant la préparation et la pose d'une bandelette comprenant des renforts longitudinaux, ladite bandelette étant posée sous forme ondulée de sorte que la longueur des renforts longitudinaux est très sensiblement supérieure à la longueur de pose. On parle de « sur-longueur » pour désigner la différence entre la longueur de bandelette effectivement posée et la longueur parcourue sur la surface de pose.

Dans la présente demande, le terme « bandelette de renforcement » ou « bandelette» désigne une étroite bande de caoutchouc incluant des renforts longitudinaux et destinée à être posée par enroulement hélicoïdal au sein de l'ébauche d'un pneumatique. Les renforts peuvent par exemple être des câbles ou des monofilaments, en acier, en matériau minéral (fibre de verre ou de carbone), en fibre synthétique ou en matériau textile de manière connue en soi dans le domaine du pneumatique. Une bandelette comprend une pluralité de renforts, par exemple entre 3 et 10 renforts. Une telle bandelette a une largeur maximale de l'ordre de 15 à 20 mm selon la largeur totale de l'armature de frettage. De préférence encore, pour l'armature de frettage d'un pneumatique pour véhicule de tourisme, la bandelette a une largeur comprise entre 10 et 15 mm. L'enroulement comprend une pluralité de tours, par exemple entre 10 et 30 tours pour constituer une armature de frettage complète.

L'invention propose en particulier un dispositif pour la préparation d'une bandelette de renforcement destinée à la fabrication d'un pneumatique, ledit dispositif permettant de préparer une bandelette de renforcement ondulée à partir d'une bandelette de renforcement plate, ledit dispositif comprenant :
- un carrousel apte à guider une pluralité de doigts dans un mouvement généralement circulaire autour d'un axe de carrousel,
- une étoile rotative selon un axe d'étoile, ladite étoile rotative portant une pluralité de galets rotatifs d'axes parallèles à l'axe d'étoile, lesdits galets étant répartis sur un cercle concentrique à l'axe d'étoile,
- des moyens de synchronisation du mouvement généralement circulaire des doigts et de la rotation de l'étoile,
- des moyens de guidage de la bandelette de renforcement plate entrant dans le dispositif,
dans lequel :
- l'axe d'étoile et l'axe de carrousel sont distants et sensiblement parallèles, lesdits doigts étant aptes à prendre appui sur une première face de la bandelette, lesdits galets étant aptes à prendre appui sur une deuxième face de la bandelette,
- chacun des doigts est porté par un support pivotant par rapport au carrousel de manière à ce que le doigt puisse adopter une position d'appui dans laquelle il prend appui sur la première face de la bandelette et une position de dégagement dans laquelle il s'écarte de la première face de la bandelette et dudit plan commun,
- le mouvement généralement circulaire donné aux doigts par le carrousel comporte une portion d'interférence dans laquelle les moyens de synchronisation permettent aux doigts et aux galets de se déplacer dans un plan commun perpendiculaire à l'axe d'étoile, les doigts et les galets étant intercalés dans ladite portion d'interférence de manière à imposer à la bandelette des ondes s'étendant dans ledit plan commun.

De préférence, une came statique commande le pivotement des supports des doigts en fonction de la position angulaire desdits supports dans leur mouvement généralement circulaire autour de l'axe de carrousel.

De préférence encore, la came statique comprend deux surfaces de came opposées, chacune des deux surfaces contrôlant un sens de pivotement des supports.

Selon une variante, la came statique comprend deux surfaces de came, chacune des deux surfaces contrôlant un sens de pivotement des supports, dans lequel la came statique commande le pivotement de chaque support par l'intermédiaire de deux galets de came, chacun des deux galets de came coopérant avec une seule des deux surfaces de came.

De préférence, les doigts sont maintenus dans leur position d'appui sur un secteur d'au moins 90° de leur mouvement circulaire autour de l'axe de carrousel, ledit secteur correspondant sensiblement à la portion d'interférence.

De préférence, le pivotement des supports des doigts par rapport au carrousel a lieu autour d'un axe de support sensiblement perpendiculaire à l'axe de carrousel.

De préférence, chacun des doigts est une pièce de révolution selon un axe de doigt, chacun des doigts étant libre de tourner par rapport à son support autour de son axe de doigt.

De préférence, les moyens de guidage comprennent des poulies aptes à guider la bandelette vers la portion d'interférence selon une direction proche dudit plan commun.

De préférence, le carrousel et l'étoile sont portés par une embase mobile par rapport à un bâti fixe.

De préférence, le dispositif comprend en outre des moyens de rouletage de la bandelette ondulée.

De préférence, le dispositif comprend en outre un cabestan apte à contrôler l'alimentation en bandelette plate.

L'invention propose également une installation comprenant le dispositif décrit ci-dessus et comprenant en outre une forme de réception rotative placée en regard de la portion d'interférence de sorte que les sommets des ondes de la bandelette ondulée peuvent venir adhérer à la surface de la forme afin de permettre le transfert de la bandelette ondulée sur la forme.

L'invention propose également un procédé de préparation d'une bandelette ondulée utilisant cette installation.

De préférence, la forme de réception est constituée par une ébauche de pneumatique portée par un tambour.

De préférence encore, on enroule en hélice une pluralité de tours de la bandelette ondulée sur l'ébauche de pneumatique, les ondes de la bandelette s'étendant dans un plan sensiblement parallèle à un plan équatorial de l'ébauche.

De préférence encore, on fait varier la hauteur des ondes au cours de l'enroulement sur l'ébauche.

De préférence encore, on rabat les ondes de la bandelette contre l'ébauche au fur et à mesure du transfert de la bandelette sur la forme à l'aide de moyens de rouletage.

La description qui suit permet de mieux comprendre la structure et le fonctionnement d'un dispositif selon l'invention selon des modes préférés de réalisation et s'appuie sur les figures 1 à 9 dans lesquelles :
- la figure 1 est une vue en coupe montrant les principes essentiels du dispositif et du procédé selon un mode de réalisation préféré de l'invention,
- la figure 2 est une vue d'ensemble représentant en perspective le dispositif de la figure 1,
- la figure 3 est une vue similaire à la figure 1 montrant certains éléments omis sur la figure 1,
- la figure 4 est une vue en perspective d'un mode de réalisation préféré de l'étoile supportant les galets du dispositif des figures précédente,
- les figures 5 et 6 sont des vues schématiques en perspective montrant deux exemples similaires d'ébauche de pneumatique obtenu par le procédé de l'invention utilisant un dispositif selon les figures précédentes,
- la figure 7 est une vue du cabestan selon un mode de réalisation préféré du dispositif de l'invention,
- la figure 8 est une vue de côté du détail d'un exemple de réalisation de la commande des supports de doigt pivotants selon un mode de réalisation préféré de l'invention,
- La figure 9 est une vue de face d'un exemple de réalisation d'une came statique pour la commande des supports de doigt pivotants illustrés à la figure 8.

Sur les différentes figures, les éléments identiques ou similaires portent les mêmes références. La description de la structure et de la fonction de ces éléments identiques ou similaires n'est donc pas systématiquement reprise.

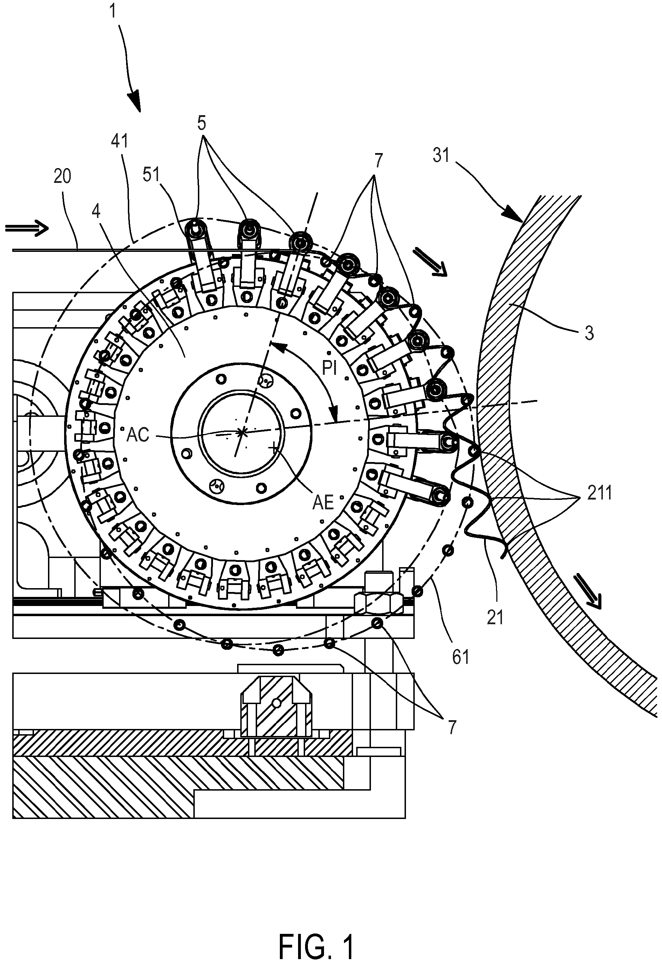

Sur la figure 1, on voit les principes essentiels du dispositif 1 selon l'invention. Ce dispositif permet la transformation d'une bandelette de renforcement plate 20 en une bandelette ondulée 21. La bandelette ondulée est posée sur une forme de réception (ici une forme rotative 3). On voit bien sur cette figure que la longueur de la bandelette posée sur la forme (et donc la longueur des renforts longitudinaux qu'elle contient) et très sensiblement supérieure à la longueur de pose parcourue sur la forme de réception.

Pour ce faire, le dispositif 1 comprend un carrousel 4 entrainant en rotation des doigts 5 selon le sens indiqué par des flèches sur la figure 1. Les doigts sont portés par des supports 51 montés pivotants sur le carrousel. Pour la clarté du dessin, on a représenté seulement une partie des supports et des doigts. Le carrousel guide ainsi les doigts dans un mouvement généralement circulaire autour d'un axe de carrousel AC alors que la commande du pivotement des supports fait que les extrémités des doigts parcourent plus précisément une trajectoire représentée par la ligne courbe 41.

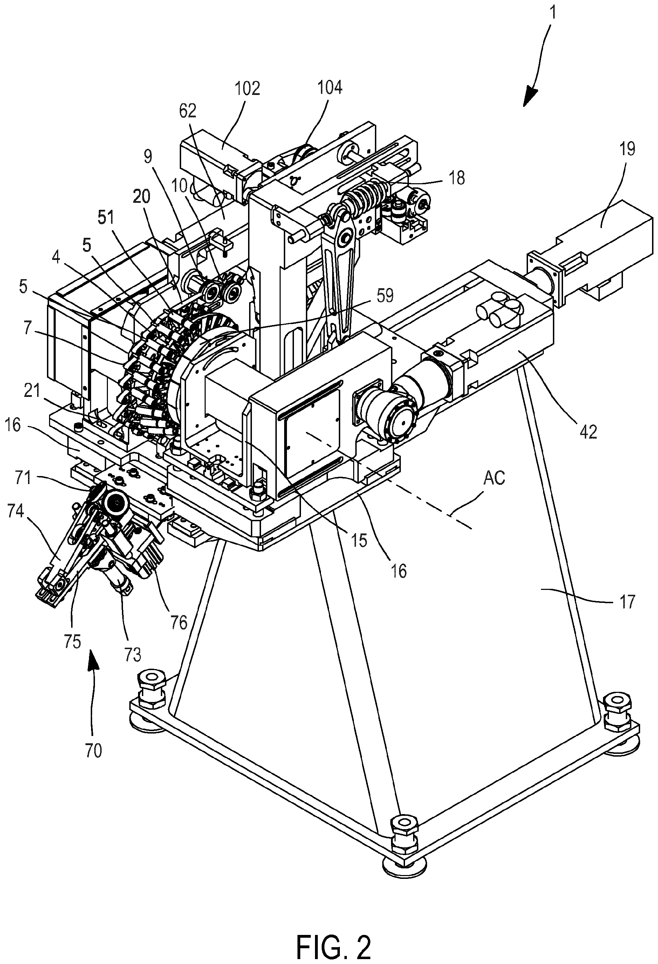

Une étoile rotative 6 (voir également les figures 2 à 4, l'étoile n'étant pas représentée sur la figure 1) porte des galets 7 répartis à sa périphérie sur un cercle 61. Le cercle 61 est concentrique à l'axe de rotation AE de l'étoile rotative. Les axes des galets sont parallèles à l'axe d'étoile AE. Les galets 7 (comme les doigts 5) sont libres de tourner autour de leurs axes respectifs. La rotation de l'étoile est contrôlée par un motoréducteur d'étoile 62 alors que le carrousel 4 est animé ici par un motoréducteur de carrousel 42 (voir figure 2).

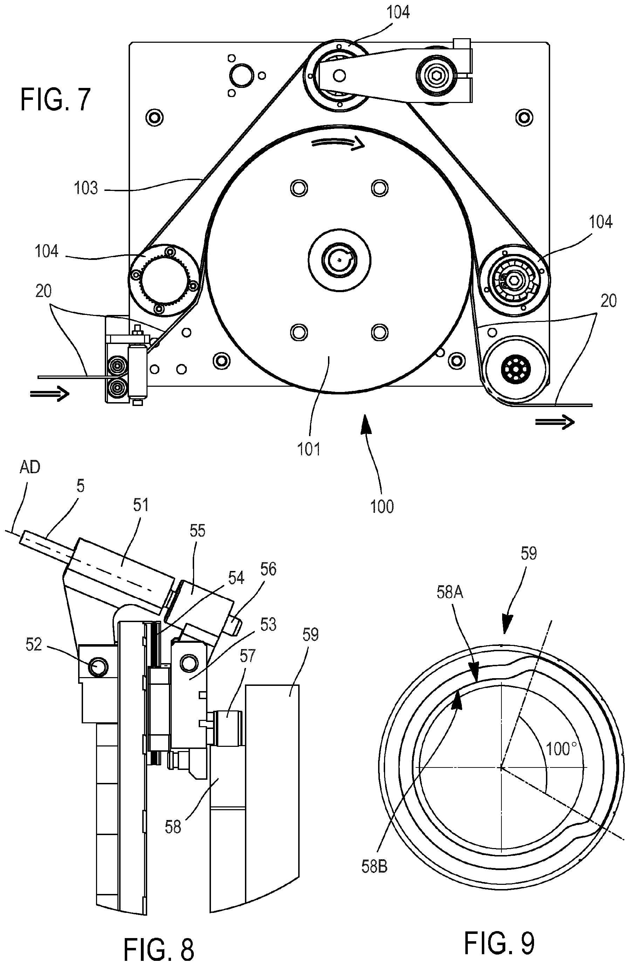

Des moyens de synchronisation permettent de contrôler la vitesse des deux motoréducteurs de manière à ce que la rotation générale des doigts 5 soit coordonnée avec celle des galets 7 de l'étoile, en particulier dans une portion d'interférence PI dans laquelle les doigts et les galets peuvent ainsi se déplacer dans un plan commun perpendiculaire à l'axe d'étoile AE. Ce plan commun correspond sensiblement au plan de la figure 1. Dans cette portion d'interférence, lors du fonctionnement du dispositif, les doigts viennent s'intercaler entre les galets de l'étoile grâce au pivotement des supports des doigts 51 (voir également les figures 2 et 8). Les doigts prennent donc appui sur la face supérieure de la bandelette alors que les galets 7 prennent appui sur la face inférieure de la bandelette. On comprend que la bandelette est progressivement forcée à prendre une forme ondulée 21.

Le dispositif 1 peut être associé à une forme rotative 3 comme représenté ici. Le dispositif est alors placé face à la forme de manière à ce que les galets de l'étoile rotative viennent l'un après l'autre s'approcher de la surface 31 de la forme. Le fonctionnement du dispositif décrit ci-dessus est synchronisé avec la rotation de la forme. Les sommets 211 des ondes de la bande ondulée 21 peuvent alors venir en contact et être pressés un à un contre la surface de la forme. La bandelette en caoutchouc peut ainsi adhérer ponctuellement à la surface de la forme rotative et être ensuite entraînée par celle-ci.

Une fois la bandelette attachée à la surface de la forme, la commande de basculement des supports de doigts peut alors imposer au doigt de s'écarter de la bandelette et rejoindre une position de dégagement dans laquelle la bandelette 21 lui échappe et peut rester liée à la forme. La bandelette est alors entrainée par la forme rotative et échappe également au contrôle des galets.

De préférence, les doigts sont maintenus dans leur position d'appui sur un secteur d'au moins 90° du mouvement circulaire autour de l'axe de carrousel, ledit secteur correspondant à la portion d'interférence Pl. Au-delà de la portion d'interférence, les doigts sont suffisamment dégagés du plan commun et des galets qu'ils ne risquent pas d'entrer en contact même si leurs trajectoires semblent se croiser sur la vue de la figure 1.

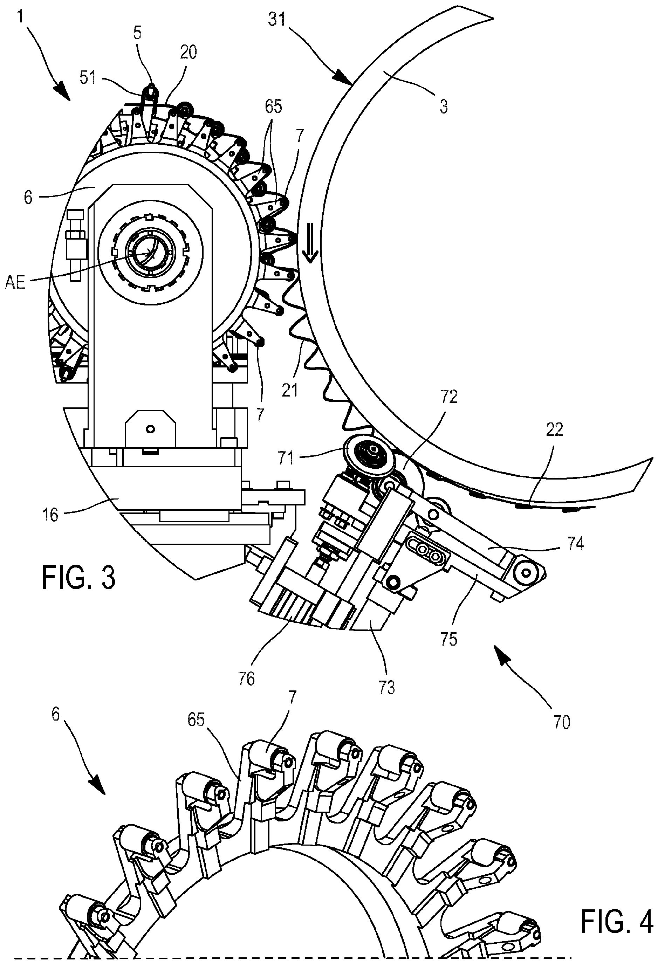

De préférence, comme bien visible à la figure 3, le dispositif permet en outre de transformer la bandelette ondulée 21 en une bandelette ondulée rouletée 22, c'est à dire en une bandelette dont les ondes ont été rabattues sur la forme de réception. La bandelette ondulée rouletée 22 est ainsi encore mieux fixée quant à sa position et quant à l'orientation longitudinale de ses renforts ce qui permet d'assurer la meilleure répartition de la sur-longueur des renforts sur la circonférence de la forme.

La figure 2 en perspective permet de mieux visualiser l'ensemble des éléments constitutifs de ce mode de réalisation préféré du dispositif.

Sur la figure 2 on voit également mieux le principe d'entrainement des doigts 5 par le carrousel 4 et leur basculement grâce aux supports 51 dont le pivotement est ici contrôlé par la came statique 59 (voir également les figures 8 et 9). Le carrousel est entrainé en rotation par le moteur de carrousel 42 et l'étoile 6 portant les galets 7 est entrainée par le moteur d'étoile 62. Comme discuté plus haut, le déplacement des doigts doit se faire en parfaite synchronisation avec la rotation de l'étoile 6 portant les galets 7. Cette synchronisation est garantie par les moyens de synchronisation, par exemple par un contrôle commun des deux moteurs électriques 42 et 62. Alternativement, le carrousel et l'étoile rotative peuvent être entrainés en rotation par le même moteur. Du fait que le carrousel n'est pas coaxial avec l'étoile, la liaison peut par exemple se faire par l'intermédiaire d'un joint d'Oldham ou d'un arbre équipé de joints homocinétiques.

Sur la figure 2, on voit également qu'une embase 16 mobile par rapport à un bâti 17 permet de contrôler la position de l'ensemble des éléments du dispositif relativement à la forme de réception et permet également de contrôler la pression avec laquelle la bandelette ondulée 21 est appliquée par les galets sur la surface de la forme. La position de l'embase mobile 16 est ici contrôlée par un vérin électrique 19. Les moyens de rouletage 70, ici sous la forme de plusieurs rouleaux presseurs, sont également portés par l'embase mobile 16 (voir également figure 3).

Un coulisseau 15, lui-même mobile par rapport à l'embase 16, supporte le carrousel. On comprend qu'en déplaçant légèrement ce coulisseau par rapport au support de l'étoile rotative (et donc par rapport à l'axe de étoile AE), on peut faire varier la hauteur des ondes imposées à la bandelette. De cette manière on peut faire varier précisément la sur-longueur donnée à la bandelette ondulée. Le déplacement du coulisseau 15 peut être contrôlé activement par un vérin électrique de coulisseau ou géré de manière passive sous l'action d'un ressort 18. Afin de donner une indication d'ordre de grandeur, on peut dire qu'une sur-longueur de 50% est obtenue lorsque les ondes ont une hauteur (amplitude) d'environ 11 mm.

Des moyens de guidage, ici sous la forme de poulies 9 et 10 placées en amont de la portion d'interférence, garantissent que la bandelette de renforcement plate 20 entre et chemine dans le dispositif selon une orientation adéquate.

La figure 3 montre certains éléments du dispositif qu'on a volontairement omis sur la figure 1. On y voit en particulier l'étoile 6 dont chacune des pointes 65 porte un galet 7. On y voit aussi le fonctionnement et la structure des moyens de rouletage 70 de la bandelette ondulée 21. Ils comprennent ici une paire de roulettes inclinées 71 dont le rôle est de garantir la position radiale des ondes avant qu'elles ne soient plaquées par la roulette droite 72 contre la surface de la forme 3. Un vérin pneumatique 73 agit sur le levier de rouletage 74 pour donner une pression adéquate à la roulette droite. Le support de rouletage 75 porte l'ensemble de ces éléments. Sa position par rapport à l'embase mobile 16 est contrôlée par un vérin d'approche 76.

A la figure 4, on voit mieux un exemple de réalisation de l'étoile. Les pointes 65 portent en leurs extrémités les galets 7. L'étoile transmet en permanence la pression nécessaire à la fixation de la bandelette lors de son transfert sur la forme. L'étoile peut en outre subir des efforts provoqués par l'inertie du dispositif lorsqu'il rencontre d'éventuelles sur-épaisseurs présentes sur la forme en rotation. Pour éviter que ces contraintes occasionnent des déformations élastiques ou permanentes, les axes des galets sont de préférence pris en chape comme représenté ici. Rappelons que les galets sont libres de tourner autour de leurs axes par rapport à l'étoile.

Le dispositif de l'invention permet donc de mettre en œuvre un procédé selon l'invention consistant à préparer et à poser sur la forme de réception une bandelette ondulée comportant une sur-longueur contrôlée. Ces deux étapes se déroulent successivement et en continu. La bandelette ondulée étant ensuite entrainée par la forme de réception. La bandelette ondulée peut ensuite être stockée en bobines et constituer un produit semi-fini destiné à rentrer dans la fabrication ultérieure d'un pneumatique.

De préférence cependant, le procédé de l'invention consiste à appliquer la bandelette directement sur l'ébauche d'un pneumatique au cours de sa confection. Par rapport au procédé consistant à préparer un produit semi-fini, la pose directe sur l'ébauche permet de mieux garantir la précision de la pose en particulier en ce qui concerne la valeur de la sur-longueur des renforts et la répartition régulière de cette sur-longueur sur la circonférence de l'ébauche. Dans ce cas, la forme de réception est donc constituée par une ébauche de pneumatique (portée par exemple par un tambour d'assemblage) sur laquelle on enroule en hélice un nombre adapté de tours de la bandelette ondulée afin de constituer l'armature de frettage du pneumatique. Cet enroulement peut se faire au diamètre du seat comme décrit plus haut en préambule de la demande puisque la sur-longueur des renforts de la bandelette ondulée autorise ensuite l'ébauche à être conformée, c'est à dire à prendre la forme pratiquement finale d'un pneumatique, avant que lesdits renforts à 0° soient réellement mis en tension.

Au cours de l'enroulement en hélice autour de l'ébauche, on peut en outre faire varier la valeur de la sur-longueur de la bandelette grâce au contrôle de la position du coulisseau 15. On peut par exemple prévoir que la sur-longueur soit plus importante au centre qu'aux épaules de la bande de roulement de sorte qu'un certain galbe peut être donné au pneumatique lors de la conformation de l'ébauche complète.

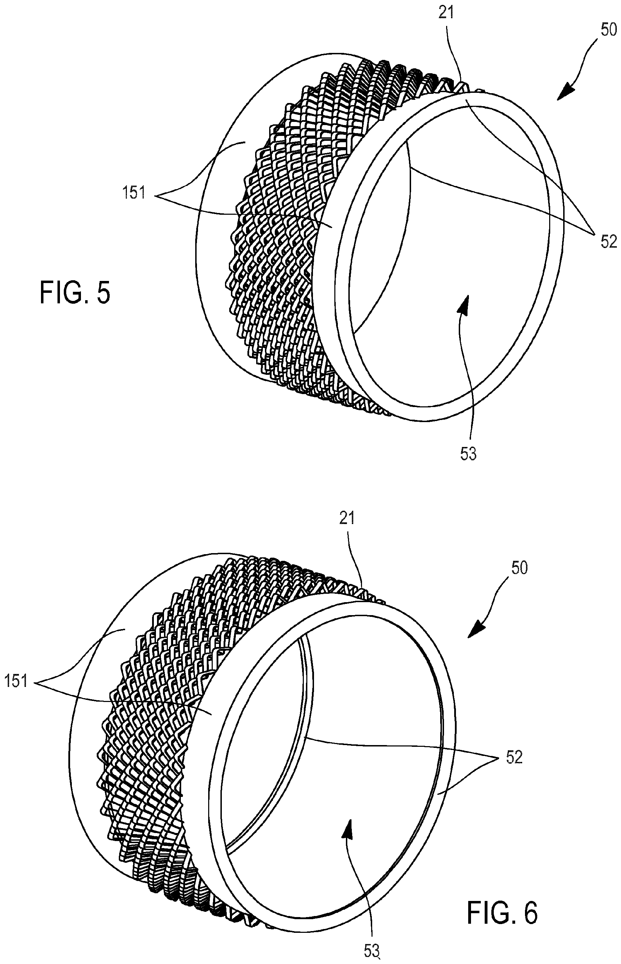

A la figure 5, on a représenté schématiquement un exemple de cette application de l'invention à la constitution d'une armature de frettage directement au sein d'une ébauche de pneumatique 50. C'est donc cette ébauche qui a servi de forme de réception pour la bandelette ondulée préparée par le dispositif de l'invention. On reconnaît les renforts à 0° disposés sous la forme d'une bandelette ondulée 21 telle que formée par le dispositif de l'invention. Les ondes de la bandelette s'étendent dans un plan parallèle au plan équatorial de l'ébauche (en négligeant l'angle d'hélice de l'enroulement comme discuté plus haut). Une quinzaine de tours ont été enroulés autour de l'ébauche afin de constituer l'armature de frettage complète.

On voit également la couche contenant les renforts de carcasse 151 et les bourrelets 52 contenant les renforts de bourrelets (souvent appelés « tringles »). Des nappes de renforts de sommet peuvent être placées sous l'armature de frettage. Une couche de gomme d'étanchéité 53 est de préférence présente à l'intérieur de la carcasse 151. Les bandelettes de renforts à 0° sont représentées ici sous la forme ondulée 21 mais non rouletée (référencée 22 sur les figures précédentes) afin de faciliter la lecture du dessin. On comprend que la forme rouletée peut être préférée pour améliorer la précision du positionnement des renforts dans la suite du procédé comme décrit plus haut. Une bande de roulement et des gommes de protection des flancs peuvent également être ajoutées à cette ébauche. Tous les constituants du futur pneumatique peuvent ainsi être posés au même diamètre réduit, c'est à dire sur un même tambour au diamètre du seat et donc sans conformation intermédiaire.

Alternativement, le tambour de pose peut également avoir un diamètre légèrement supérieur au diamètre du seat s'il comprend des gorges pour recevoir les bourrelets de l'ébauche. On obtient alors plutôt une ébauche telle que représentée à la figure 6.

Dans un cas comme dans l'autre, l'ensemble ainsi constitué peut alors être placé dans une presse de vulcanisation, conformé puis moulé et vulcanisé de manière connue en soi.

Afin de donner à l'ensemble de l'enroulement une rigidité homogène, il peut être prévu d'enrouler le premier et le dernier tour de bandelette sans déplacement axial et donc sur lui-même. De même, pour obtenir une densité de renfort suffisante, il peut être préférable d'enrouler successivement une pluralité de couches d'armature de frettage selon le principe de l'invention.

De préférence, l'alimentation du dispositif en bandelette plate fait l'objet d'un contrôle précis de son débit. Ceci peut être obtenu grâce à l'utilisation d'un cabestan motorisé placé en amont du dispositif. La figure 7 montre un exemple de réalisation de ce cabestan 100 (pratiquement invisible sur la figure 2). Sur cette figure 7, on voit la bandelette plate 20 être guidée autour de la poulie 101 du cabestan, la rotation de cette poulie étant contrôlée par le moteur de cabestan 102 (visible à la figure 2). De préférence encore, une sangle 103 tendue entre des renvois 104 vient plaquer la bandelette sur la poulie de cabestan afin de lui interdire tout glissement intempestif. La vitesse de rotation du cabestan, c'est à dire la vitesse de la bandelette plate alimentant le dispositif 1, peut être contrôlée précisément en fonction de la vitesse de rotation de la forme de réception afin de contrôler tout aussi précisément la sur-longueur des renforts posés, y compris de manière dynamique au cours de l'enroulement en hélice de la bandelette ondulée comme décrit plus haut.

Afin de s'adapter aux variations de longueurs délivrées par le cabestan, le décalage entre l'axe d'étoile AE et l'axe de carrousel AC peut être adapté activement par l'intermédiaire d'une gestion basée sur un mesure de la tension effective de la bandelette. De préférence cependant, cette adaptation est assurée de manière passive au moyen par exemple d'un simple ressort 18 tendant à repousser le coulisseau 15 et donc à augmenter l'amplitude des ondes pour absorber la longueur de bandelette effectivement délivrée par le cabestan.

Les figures 8 et 9 montrent en détail un exemple de réalisation des supports de doigt 51 et de la commande de leur basculement dans la portion d'interférence.

Pour rendre la figure 8 plus lisible, on n'y a représenté qu'un seul support 51 articulé par son axe de support 52 sur le carrousel 4. L'axe de support est sensiblement perpendiculaire à l'axe de carrousel. Rappelons que le doigt 5 est libre de tourner autour de l'axe de doigt AD par rapport au support. Le support 51 est représenté ici dans sa position de dégagement. Un chariot 53 coulisse sur une glissière 54 et contrôle le pivotement du support par l'intermédiaire de la douille 55 montée glissante sur la queue 56 du support. Le déplacement du chariot 53 est imposé par le roulement d'un galet de came 57 sur un surface de came 58, un ressort (non représenté) pouvant assurer le retour vers la position de dégagement. Au lieu de la combinaison d'un ressort tendant à amener le support dans l'une des positions et une came imposant l'autre position, on peut utiliser un système à double contact dans lequel le galet est guidé dans une rainure comme représenté à la figure 9 qui monte une came rainurée 59 comportant deux surfaces de came 58A et 58B sensiblement parallèles. Ainsi les mouvements du chariot et donc du support de doigt sont définis positivement tout au long de la rotation du carrousel. Cependant, un jeu est nécessaire pour que le système puisse fonctionner. Alternativement, un fonctionnement similaire peut utiliser deux galets de came par chariot, chacun des deux galets de came étant associé à une surface de came propre. Dans ce cas le système peut fonctionner sans aucun jeu ni glissement.

La came rainurée 59 représenté à la figure 9 impose une position d'appui sur une plage d'environ 100° d'angle correspondant sensiblement à la portion d'interférence PI. Le reste de la rotation du carrousel correspondant aux deux phases de transition et à la position de dégagement.

Grâce au dispositif et au procédé de l'invention, on peut assembler des ébauches de pneumatique comprenant des renforts à 0°, lesdits renforts étant posés avant la conformation de l'ébauche, la qualité finale des ébauche étant irréprochable et la productivité industrielle du procédé étant tout à fait satisfaisante.

## Revendications

1. Dispositif (1) pour la préparation d'une bandelette de renforcement destinée à la fabrication d'un pneumatique, ledit dispositif permettant de préparer une bandelette de renforcement ondulée (21) à partir d'une bandelette de renforcement plate (20), ledit dispositif comprenant :
- un carrousel (4) apte à guider une pluralité de doigts (5) dans un mouvement généralement circulaire autour d'un axe de carrousel (AC),
- une étoile (6) rotative selon un axe d'étoile (AE), ladite étoile rotative portant une pluralité de galets rotatifs (7) d'axes parallèles à l'axe d'étoile, lesdits galets étant répartis sur un cercle (61) concentrique à l'axe d'étoile,
- des moyens de synchronisation du mouvement généralement circulaire des doigts et de la rotation de l'étoile,
- des moyens de guidage (9, 10) de la bandelette de renforcement plate entrant dans le dispositif,
dans lequel :
- l'axe d'étoile et l'axe de carrousel sont distants et sensiblement parallèles, lesdits doigts étant aptes à prendre appui sur une première face de la bandelette, lesdits galets étant aptes à prendre appui sur une deuxième face de la bandelette,
- chacun des doigts est porté par un support (51) pivotant par rapport au carrousel de manière à ce que le doigt puisse adopter une position d'appui dans laquelle il prend appui sur la première face de la bandelette et une position de dégagement dans laquelle il s'écarte de la première face de la bandelette et dudit plan commun,
- le mouvement généralement circulaire donné aux doigts par le carrousel comporte une portion d'interférence (PI) dans laquelle les moyens de synchronisation permettent aux doigts et aux galets de se déplacer dans un plan commun perpendiculaire à l'axe d'étoile, les doigts et les galets étant intercalés dans ladite portion d'interférence de manière à imposer à la bandelette des ondes s'étendant dans ledit plan commun.

2. Dispositif selon la revendication 1, dans lequel une came statique (59) commande le pivotement des supports des doigts en fonction de la position angulaire desdits supports dans leur mouvement généralement circulaire autour de l'axe de carrousel.

3. Dispositif selon la revendication 2, dans lequel la came statique comprend deux surfaces de came opposées (58A, 58B), chacune des deux surfaces contrôlant un sens de pivotement des supports.

4. Dispositif selon la revendication 2, dans lequel la came statique comprend deux surfaces de came, chacune des deux surfaces contrôlant un sens de pivotement des supports, dans lequel la came statique commande le pivotement de chaque support par l'intermédiaire de deux galets de came, chacun des deux galets de came coopérant avec une seule des deux surfaces de came.

5. Dispositif selon l'une des revendications précédentes, dans lequel les doigts sont maintenus dans leur position d'appui sur un secteur d'au moins 90° de leur mouvement circulaire autour de l'axe de carrousel, ledit secteur correspondant sensiblement à la portion d'interférence (PI).

6. Dispositif selon l'une des revendications précédentes, dans lequel le pivotement des supports des doigts par rapport au carrousel a lieu autour d'un axe de support (52) sensiblement perpendiculaire à l'axe de carrousel (AC).

7. Dispositif selon l'une des revendications précédentes, dans lequel chacun des doigts est une pièce de révolution selon un axe de doigt (AD), chacun des doigts étant libre de tourner par rapport à son support (51) autour de son axe de doigt.

8. Dispositif selon l'une des revendications précédentes, dans lequel les moyens de guidage comprennent des poulies (9, 10) aptes à guider la bandelette vers la portion d'interférence selon une direction proche dudit plan commun.

9. Dispositif selon l'une des revendications précédentes, dans lequel le carrousel et l'étoile (6) sont portés par une embase (16) mobile par rapport à un bâti fixe (17).

10. Dispositif selon l'une des revendications précédentes comprenant en outre des moyens de rouletage (70) de la bandelette ondulée.

11. Dispositif selon l'une des revendications précédentes, comprenant en outre un cabestan (100) apte à contrôler l'alimentation en bandelette plate.

12. Installation comprenant le dispositif (1) selon l'une des revendications précédentes et comprenant en outre une forme de réception rotative (3) placée en regard de la portion d'interférence (PI) de sorte que les sommets des ondes de la bandelette ondulée peuvent venir adhérer à la surface de la forme afin de permettre le transfert de la bandelette ondulée sur la forme.

13. Procédé de préparation d'une bandelette ondulée utilisant l'installation de la revendication 12.

14. Procédé selon la revendication 13, dans lequel la forme de réception est constituée par une ébauche de pneumatique (50) portée par un tambour.

15. Procédé selon la revendication 14, dans lequel on enroule en hélice une pluralité de tours de la bandelette ondulée sur l'ébauche de pneumatique, les ondes de la bandelette s'étendant dans un plan sensiblement parallèle à un plan équatorial de l'ébauche.

16. Procédé selon la revendication 15, dans lequel on fait varier la hauteur des ondes au cours de l'enroulement sur l'ébauche.

17. Procédé selon l'une des revendications 13 à 16, dans lequel on rabat les ondes de la bandelette contre l'ébauche au fur et à mesure du transfert de la bandelette sur la forme à l'aide de moyens de rouletage (70).

## Patentansprüche

1. Vorrichtung (1) zur Herstellung eines Verstärkungsstreifens, der zur Herstellung eines Reifens bestimmt ist, wobei die Vorrichtung ermöglicht, einen gewellten Verstärkungsstreifen (21) aus einem flachen Verstärkungsstreifen (20) herzustellen, wobei die Vorrichtung umfasst:
- ein Karussell (4), das geeignet ist, mehrere Finger (5) in einer im Wesentlichen kreisförmigen Bewegung um eine Karussellachse (AC) zu führen,
- einen Stern (6), der um eine Sternachse (AE) drehbar ist, wobei der drehbare Stern mehrere drehbare Rollen (7) mit zur Sternachse parallelen Achsen trägt, wobei die Rollen auf einem zur Sternachse konzentrischen Kreis (61) verteilt sind,
- Mittel zur Synchronisation der im Wesentlichen kreisförmigen Bewegung der Finger und der Drehung des Sterns,
- Mittel zur Führung (9, 10) des in die Vorrichtung eintretenden flachen Verstärkungsstreifens,
wobei:
- die Sternachse und die Karussellachse beabstandet und im Wesentlichen parallel sind, wobei die Finger geeignet sind, sich auf einer ersten Seite des Streifens abzustützen, wobei die Rollen geeignet sind, sich auf einer zweiten Seite des Streifens abzustützen,
- jeder der Finger von einem Träger (51) getragen wird, der in Bezug auf das Karussell so schwenkbar ist, dass der Finger eine Anlageposition, in welcher er sich auf der ersten Seite des Streifens abstützt, und eine Freigabeposition, in welcher er sich von der ersten Seite des Streifens und von der gemeinsamen Ebene entfernt, einnehmen kann,
- die im Wesentlichen kreisförmige Bewegung, in welche die Finger durch das Karussell versetzt werden, einen Interferenzabschnitt (PI) aufweist, in welchem die Mittel zur Synchronisation ermöglichen, dass sich die Finger und die Rollen in einer gemeinsamen Ebene bewegen, die zu der Sternachse senkrecht ist, wobei die Finger und die Rollen in dem Interferenzabschnitt so ineinandergreifen, dass sie dem Streifen Wellen aufzwingen, die sich in der gemeinsamen Ebene erstrecken.

2. Vorrichtung nach Anspruch 1, wobei ein statischer Nocken (59) die Schwenkung der Träger der Finger in Abhängigkeit von der Winkelposition der Träger in ihrer im Wesentlichen kreisförmigen Bewegung um die Karussellachse steuert.

3. Vorrichtung nach Anspruch 2, wobei der statische Nocken zwei einander gegenüberliegende Nockenflächen (58A, 58B) umfasst, wobei jede der zwei Flächen eine Schwenkrichtung der Träger kontrolliert.

4. Vorrichtung nach Anspruch 2, wobei der statische Nocken zwei Nockenflächen umfasst, wobei jede der zwei Flächen eine Schwenkrichtung der Träger kontrolliert, wobei der statische Nocken die Schwenkung jedes Trägers über zwei Nockenrollen steuert, wobei jede der zwei Nockenrollen mit nur einer der zwei Nockenflächen zusammenwirkt.

5. Vorrichtung nach einem der vorhergehenden Ansprüche, wobei die Finger auf einem Sektor von wenigstens 90° ihrer kreisförmigen Bewegung um die Karussellachse in ihrer Anlageposition gehalten werden, wobei der Sektor im Wesentlichen dem Interferenzabschnitt (PI) entspricht.

6. Vorrichtung nach einem der vorhergehenden Ansprüche, wobei die Schwenkung der Träger der Finger in Bezug auf das Karussell um eine Trägerachse (52) erfolgt, die im Wesentlichen senkrecht zur Karussellachse (AC) ist.

7. Vorrichtung nach einem der vorhergehenden Ansprüche, wobei jeder der Finger ein Rotationskörper um eine Fingerachse (AD) ist, wobei sich jeder der Finger in Bezug auf seinen Träger (51) frei um seine Fingerachse drehen kann.

8. Vorrichtung nach einem der vorhergehenden Ansprüche, wobei die Mittel zur Führung Antriebsscheiben (9, 10) umfassen, die geeignet sind, den Streifen in Richtung des Interferenzabschnitts in einer zur gemeinsamen Ebene nahen Richtung zu führen.

9. Vorrichtung nach einem der vorhergehenden Ansprüche, wobei das Karussell und der Stern (6) von einem Unterteil (16) getragen werden, das in Bezug auf ein festes Gestell (17) beweglich ist.

10. Vorrichtung nach einem der vorhergehenden Ansprüche, welche außerdem Mittel zum Aufwalzen (70) des gewellten Streifens umfasst.

11. Vorrichtung nach einem der vorhergehenden Ansprüche, welche außerdem eine Winde (100) umfasst, die geeignet ist, die Zuführung von flachen Streifen zu steuern.

12. Anlage, welche die Vorrichtung (1) nach einem der vorhergehenden Ansprüche umfasst und außerdem eine drehbare Aufnahmeform (3) umfasst, die gegenüber dem Interferenzabschnitt (PI) angeordnet ist, derart, dass die Scheitel der Wellen des gewellten Streifens an der Oberfläche der Form anhaften können, um die Übertragung des gewellten Streifens auf die Form zu ermöglichen.

13. Verfahren zur Herstellung eines gewellten Streifens unter Verwendung der Anlage von Anspruch 12.

14. Verfahren nach Anspruch 13, wobei die Aufnahmeform aus einem Reifenrohling (50) besteht, der von einer Trommel getragen wird.

15. Verfahren nach Anspruch 14, wobei mehrere Windungen des gewellten Streifens spiralförmig auf den Reifenrohling gewickelt werden, wobei sich die Wellen des Streifens in einer Ebene erstrecken, die im Wesentlichen zu einer Äquatorialebene des Rohlings parallel ist.

16. Verfahren nach Anspruch 15, wobei während des Aufwickelns auf den Rohling ein Variieren der Höhe der Wellen bewirkt wird.

17. Verfahren nach einem der Ansprüche 13 bis 16, wobei die Wellen des Streifens während der Übertragung des Streifens auf die Form nach und nach mithilfe der Mittel zum Aufwalzen (70) auf den Rohling umgeschlagen werden.

## Claims

1. Device (1) for preparing a reinforcing strip intended for the manufacturing of a tyre, said device making it possible to prepare a wavy reinforcing strip (21) from a flat reinforcing strip (20), said device comprising:
- a carousel (4) that is able to guide a plurality of fingers (5) in a generally circular movement about a carousel axis (AC),
- a rotary star wheel (6) that is rotatable about a star-wheel axis (AE), said rotary star wheel bearing a plurality of rotary rollers (7) having axes parallel to the star-wheel axis, said rollers being distributed in a concentric circle (61) with respect to the star-wheel axis,
- means for synchronizing the generally circular movement of the fingers and the rotation of the star wheel,
- guide means (9, 10) for guiding the flat reinforcing strip entering the device,
in which:
- the star-wheel axis and the carousel axis are spaced apart from and substantially parallel to one another, said fingers being able to bear against a first face of the strip, said rollers being able to bear against a second face of the strip,
- each of the fingers is borne by a support (51) that pivots with respect to the carousel such that the finger can take up a bearing position in which it bears against the first face of the strip and a spaced-apart position in which it is away from the first face of the strip and from said common plane,
- the generally circular movement imparted on the fingers by the carousel has an intersecting portion (PI) in which the synchronizing means allow the fingers and the rollers to move in a common plane perpendicular to the star-wheel axis, the fingers and the rollers being interposed in said intersecting portion so as to impose waves on the strip that extend in said common plane.

2. Device according to Claim 1, wherein a static cam (59) controls the pivoting of the supports of the fingers depending on the angular position of said supports in the generally circular movement thereof about the carousel axis.

3. Device according to Claim 2, wherein the static cam comprises two opposite cam surfaces (58A, 58B), each of the two surfaces controlling a pivoting direction of the supports.

4. Device according to Claim 2, wherein the static cam comprises two cam surfaces, each of the two surfaces controlling a pivoting direction of the supports, wherein the static cam controls the pivoting of each support by way of two cam rollers, each of the two cam rollers cooperating with one of the two cam surfaces.

5. Device according to one of the preceding claims, wherein the fingers are kept in their bearing position over a sector of at least 90° of their circular movement about the carousel axis, said sector corresponding substantially to the intersecting portion (PI).

6. Device according to one of the preceding claims, wherein the pivoting of the supports of the fingers with respect to the carousel takes place about a support axis (52) substantially perpendicular to the carousel axis (AC).

7. Device according to one of the preceding claims, wherein each of the fingers is a component exhibiting symmetry of revolution about a finger axis (AD), each of the fingers being free to rotate about its finger axis with respect to its support (51).

8. Device according to one of the preceding claims, wherein the guide means comprise pulleys (9, 10) that are able to guide the strip to the intersecting portion in a direction close to said common plane.

9. Device according to one of the preceding claims, wherein the carousel and the star wheel (6) are borne by a base (16) that is movable with respect to a fixed frame (17).

10. Device according to one of the preceding claims, also comprising stitching means (70) for stitching the wavy strip.

11. Device according to one of the preceding claims, also comprising a winch (100) that is able to control the supply with flat strip.

12. Installation comprising the device (1) according to one of the preceding claims and also comprising a rotary receiving form (3) that is placed facing the intersecting portion (PI) so that the peaks of the waves of the wavy strip can adhere to the surface of the form so as to allow the wavy strip to be transferred onto the form.

13. Method for preparing a wavy strip using the installation in Claim 12.

14. Method according to Claim 13, wherein the receiving form is made up of a green tyre (50) carried by a drum.

15. Method according to Claim 14, wherein a plurality of turns of the wavy strip are wound in a helix onto the green tyre, the waves of the strip extending in a plane substantially parallel to an equatorial plane of the green tyre.

16. Method according to Claim 15, wherein the height of the waves is varied during the process of winding onto the green tyre.

17. Method according to one of Claims 13 to 16, wherein the waves of the strip are folded down against the green tyre while the strip is being transferred onto the form with the aid of stitching means (70).
